Europäisches Patentamt

(19) European Patent Office

Office européen des brevets

(11) Publication number: 0 181 043

A1

## (12) EUROPEAN PATENT APPLICATION

(21) Application number: 85201788.8

(22) Date of filing: 01.07.81

(51) Int. Cl.⁴: G 02 F 1/133

(30) Priority: 03.07.80 US 165753

(43) Date of publication of application:
14.05.86 Bulletin 86/20

(84) Designated Contracting States:
BE CH DE FR GB IT LI NL SE

(60) Publication number of the earlier application
in accordance with Art. 76 EPC: 0 044 637

(71) Applicant: CONTROL INTERFACE COMPANY LIMITED
6 Emery Avenue
Randolph New Jersey 07869(US)

(72) Inventor: Bohmer, William
14 Harwich Road
Flanders New Jersey 07836(US)

(72) Inventor: Betancourt, Walter J.
25 Mirror Place
Oak Ridge, NJ 07438(US)

(72) Inventor: Hoffman, Louis S.
Evans Farm Road
Morristown, NJ 07960(US)

(74) Representative: Marsh, Roy David et al,
Brewer & Son 5-9, Quality Court Chancery Lane
London WC2A 1HT(GB)

(54) Field sensitive display device.

(57) A field sensitive display device for forming a display when subjected to visible light comprises a field sensitive material (22, 152), first and second spaced electrodes (14A, 14B; 114A, 114B) each of the spaced electrodes being disposed in a different plane spaced apart from one another for inducing a field therebetween, means (16, 20) for containing the field sensitive material and the spaced electrodes with the field sensitive material being relatively disposed between the spaced electrodes in order that a field induced by the spaced electrodes across the field sensitive material is capable of affecting the field sensitive material, a first (14A, 114A) of the spaced electrodes including an elongated impedance element (24A, 124A) and a plurality of elongated conductive, substantially low impedance portions (28) spaced with respect to one another along their length, the plurality of low impedance portions being connected to different electrical locations disposed along the length of the impedance element and extending therefrom, first terminal means (30A, 31A) connected to the ends of the elongated impedance element for applying a first electrical signal thereto, a second (14B, 114B) of the spaced electrodes including an elongated impedance element (24B, 124B) and a plurality of elongated, conductive, substantially low impedance portions (28) spaced with respect to one another along their length, the plurality of low impedance portions being connected to different electrical locations disposed along the length of the impedance element and extending therefrom, and a second teminal means (30B, 31B) connected to the second electrode for applying a second electrical signal thereto.

FIG. I.

- 1 -

## FIELD SENSITIVE DISPLAY DEVICE

The present invention relates to a field sensitive display device for forming a display when subjected to visible light comprising a field sensitive material, spaced electrodes for inducing a field therebetween, means for containing the field sensitive material and the spaced electrodes with the field sensitive material being relatively disposed between the spaced electrodes in order that a field induced by the spaced electrodes across the field sensitive material is capable of affecting the field sensitive material, a first of the spaced electrodes including an elongated impedance element and a plurality of elongated conductive, substantially low impedance portions spaced with respect to one another along their length, the plurality of low impedance portions being connected to different electrical locations disposed along the length of the impedance element and extending therefrom, first terminal means connected to the ends of the elongated impedance element for applying a first electrical signal thereto, a second of the spaced electrodes including a conductive substantially low impedance layer, and a second terminal means connected to the second electrode for applying a second electrical signal thereto.

The invention is therefore in the field of field sensitive optical displays, particularly of the field effect and field excited types, and to the generation of the fields for activating the displays and to the scanning of displays. More particularly, the invention concerns liquid crystal, optoceramic and electroluminescence displays, and electrode and scanning arrangements therefor.

The present invention contemplates utilization of liquid crystal materials in which the propagation or characteristics of light incidence thereon can be altered by inducing an electric or magnetic field in the liquid crystal material. Such liquid crystal materials include, but are not limited to, nematic liquid crystal materials possessing dynamic or quiescent scattering, or twisted field-effect electro-optical properties, and the mixtures of those nematic liquid crystal materials with cholesteric liquid crystal materials.

In a dynamic scattering liquid crystal material, light is transmitted substantially unaffected through the material in the absence of a field. When a field of sufficient magnitude is induced in the liquid crystal material, light incident upon the material is optically scattered and transmission of light through the material is substantially prevented.

A quiescent scattering liquid crystal material possesses field effect electro-optical properties which are the converse of those of the dynamic scattering liquid crystal, that is, in the absence of a field, the quiescent scattering liquid crystal material scatters incident light, while a field induced in the quiescent liquid crystal material causes it to transmit incident light therethrough.

In a twisted nematic liquid crystal material, layers of molecules at opposed surfaces of the material can be caused to be aligned at an angle with each other in the absence of a field. The molecules between the opposed surfaces have varying angular alignments with the result that the molecular orientation through the material from one surface to the other is helical or "twisted". The plane of polarization of plane polarized light is rotated by the angle formed by the opposed surface molecules as the light passes through the liquid crystal material in the absence of a field. The application of a field to the material destroys the twisted alignment of the molecules with the result that the material transmits incident plane polarized light therethrough without substantial rotation of the plane of polarization.

Mixtures of nematic and cholesteric liquid crystal materials provide a storage characteristic to the scattering nematic liquid crystal materials. Such mixtures retain field-induced electro-optical characteristics after the field is removed. The application of an appropriate ac (alternating current) field returns the material to the state it normally possesses in the absence of a field.

Liquid crystal materials of the types referred to, as well as others, are well known in the prior art. See, for example, S. Sherr, "Electronic Displays", John Wiley & Sons, New York, 1979; G. Heilmeier, "Liquid-Crystal Display Device", Scientific American, April, 1970, pp. 100-106; G. Heilmeier, L. Zanoni & L. Barton, "Dynamic Scattering: A New Electrooptic Effect in Certain Classes of Nematic Liquid Crystals", Proceedings of the IEEE, Vol. 56, No. 7, July 1968, pp. 1162-1171;  and U.S. Patent No. 3,918,796 on November 11, 1975 to Fergason.

Nematic scattering liquid crystal electro-optical elements are well known in the prior art, as described, for example, in U.S. Patent No. 3,322,458, issued on May 30, 1967, to Williams.  Twisted liquid crystal electro-optical elements which require the use of polarizing elements, are also well known in the prior art, as described, for example, in the aforementioned '796 Fergason patent.  The Fergason '796 patent and U.S. Patent No. 3,834,792, issued on September 10, 1976, to Janning, describe two arrangements for aligning liquid crystal molecules in a display in order that polarized light passing through the material in the absence of a field is rotated.  The Fergason '796 patent teaches rubbing each of the glass plates which enclose the liquid crystal material in a single predetermined direction and thereafter positioning the plates with the directions of rubbing of the plates forming an angle through which the polarized light is to be rotated.  The Janning '792 patent teaches the growth of an alignment film on each plate and then the arranging of the plates with the directions of growth on each of the plates forming a desired angle with respect to one another.  Both the Fergason '796 and the Janning '792 patents disclose arrangements of polarizers and twisted liquid crystal cells.

U.S. Patent No. 3,820,875, issued on June 28, 1974, to William Bohmer, one of the inventors hereof, discloses

- 5 -

0181043

devices utilizing field-effect scattering dielectrics, such as for example, nematic liquid crystal materials and mixtures of cholesteric and nematic liquid crystal materials. The '875 patent also discloses scanning devices incorporating such dielectrics. The disclosure of the '875 patent is incorporated herein by reference. The '875 patent also discloses display cells having both a resistive electrode in which a voltage gradient can be generated and a conductive electrode. By applying suitable control voltages to such cells and combination of such cells, displays can be formed which include those having a movable dot or line. Sequential scanning of such cells can provide displays comprising patterns or images.

U.S. Patent No. 3,675,988, issued on July 11, 1972, to Soref discloses liquid crystal display devices in which a variety of images, such as a moving bright spot, a variable length bar, a moving arrow and a moving window, can be generated. The Soref '988 patent discloses a liquid crystal display device which includes transparent electrodes uniformly coated on the surface of opposed plates enclosing the liquid crystal material. One of the electrodes has high resistivity with the result that a voltage gradient can be generated along the extent of the electrode, i.e. each line location of the electrode will have a different voltage level.

U.S. Patent No. 3,807,831 issued on April 30, 1974 to Soref discloses a liquid crystal display device which includes interleaved arrays of alternate parallel electrodes. A field is induced between interleaved electrodes.

Prior art optoceramic devices are disclosed in C.E. Land, P.D. Thatcher and G.H. Haertling, Electrooptic Ceramics, Academic Press, 1974 at pages 137-233.

According to the present invention there is provided a field sensitive display device for forming a display when subjected to visible light comprising a field sensitive material, first and second spaced electrodes each of the spaced electrodes being disposed in a different plane spaced apart from one another for inducing a field therebetween, means for containing the field sensitive material and the spaced electrodes with the field sensitive material being relatively disposed between the spaced electrodes in order that a field induced by the spaced electrodes across the field sensitive material is capable of affecting the field sensitive material, a first of the spaced electrodes including an elongated impedance element and a plurality of elongated conductive, substantially low impedance portions spaced with respect to one another along their length, the plurality of low impedance portions being connected to different electrical locations disposed along the length of the impedance element and extending therefrom, first terminal means connected to the ends of the elongated impedance element for applying a first electrical signal thereto, a second of the spaced electrodes including an elongated impedance element and a plurality of elongated conductive, substantially low impedance portions spaced with respect to one another along their length the plurality of low impedance portions being connected to different electrical locations disposed along the length of the impedance element and extending therefrom, and a second terminal means connected to the second electrode for applying a second electrical signal thereto.

The description which follows hereinafter, of embodiments of the invention, indicates how the invention provides simplified field sensitive optical devices for displaying, *inter alia*, a movable dot, having a reduced number of terminals for selectively inducing fields in such display devices for scanning such devices to provide desired images, e.g. intersecting line images which can be moved independently of one another or a line image capable of pivotal movement. The present invention also enables the response time and life of liquid crystal display devices to be improved, the electrode structures and address arrangements for the devices to be simplified and the superimposition of varying and dc fields in the field sensitive material.

The invention yields displays which utilize field sensitive materials and relatively simple addressing arrangements comprising a reduced number of terminals for inducing fields in or upon the material. Each of the electrodes includes an impedance portion disposed in a non-active region in order to avoid affecting the field sensitive material, and a plurality of conductive, substantially low impedance elements extending in an active region in order to affect directly the field sensitive material. Each low impedance portion is in electrical contact with the impedance portion at a different impedance location thereof and extends therefrom. Only two terminals are required for the impedance electrode, i.e. one at each end of the impedance portion. An additional terminal may be provided for a capacitance disposed directly in contract with the low impedance portions. Devices having arrangements of such electrodes can provide a plurality of different displays by utilizing relatively simple addressing and scanning arrangements.

In the disclosed embodiments, the impedance portion is substantially resistive and the low impedance portions are substantially non-resistive. In describing such electrodes and electrode portions as being resistive or not-resistive, it will be understood that respective electrodes and portions may be impedance or low impedance, respectively. Also in the disclosed embodiments, opposed plates contain the field sensitive material and the electrodes are disposed in, on or adjacent the plates or in, on or adjacent the field sensitive material. The electrodes may be spaced with the field sensitive material therebetween, or substantially co-planar and disposed in or adjacent to the field sensitive material.

In one embodiment, both of the electrodes include a resistive portion with conductive, substantially non-resistive elements or portions connected thereto disposed in, on or adjacent to opposed plates, the conductive elements extending either transversely to each other in a grid pattern or parallel to each other. Selectively addressing the electrodes in accordance with the invention provides selected regions bounded by conductive elements to be made to contrast other regions.

In another embodiment, the electrodes are disposed substantially in a common plane in or adjacent to the field sensitive material with the non-resistive elements of one electrode interleaved with those of the other electrode. Selectively addressing the electrodes provides selected regions extending transversely of adjacent interleaved non-resistive elements to be made to contrast other regions.

The aforementioned display embodiments may provide displays of a movable dot, individually movable intersecting lines, a pivoting line and other displays by means of various addressing schemes and various arrangements of the cells alone or with other optical elements, such as polarizers.

Liquid crystal material may be utilized as the field sensitive material.

Otherwise, the field sensitive material is an optoceramic or an electroluminescent material.

These and other aspects of the present invention will be more apparent from the following description of the preferred embodiments of the invention taken in conjunction with the accompanying drawings and appended claims.

The present invention is illustrated by way of example and not limitation in the figures of the accompanying drawings in which like references indicate similar parts and in which:

Fig. 1 is a perspective view of a liquid crystal cell according to an embodiment of the invention in which an electrode is disposed on each plate of the cell;

Fig. 2 is a schematic diagram of a display according to the invention which utilizes the liquid crystal cell of Fig. 1;

Fig. 3 is a schematic diagram of a display according to another embodiment of the invention utilizing the liquid crystal cell of Fig. 1;

Fig. 3A is a plan view of a meter instrument utilizing the liquid crystal cell of Fig. 3;

Fig. 4 is a schematic diagram of yet another display according to the invention utilizing the liquid crystal cell of Fig. 1;

Fig 5 is an elevation view of an optoceramic display cell according to the invention;

Fig. 6 is a plan view of the optoceramic cell of Fig. 5; and

Fig. 7 is an elevation view of another embodiment of an optoceramic cell according to the invention depicting an interleaved arrangement of portions of the electrode.

In the description of the preferred embodiments herein, various electrode structures are described for use with field-effect material, in particular, liquid crystal and optoceramic material. It will, however, be understood that such electrode structures can also be used in other field-sensitive materials, for example, field-excited materials such as, for example, electroluminescent materials.

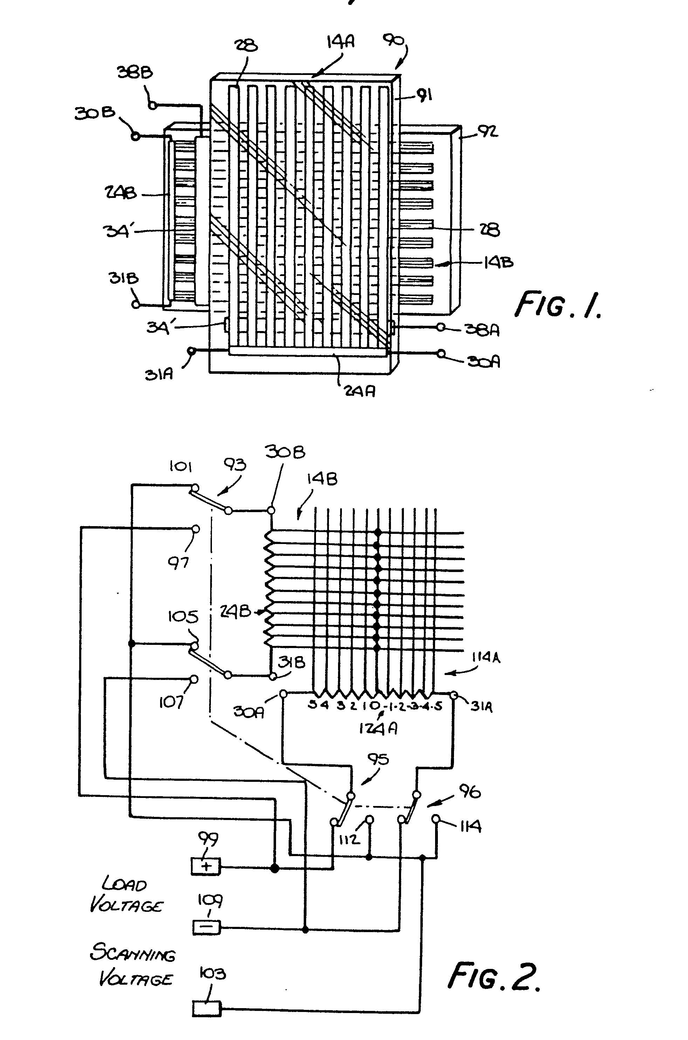

Liquid crystal cells are illustrated in Fig. 1 and optoceramic cells are illustrated in Figs. 5,6 and 7 which include improved electrode structures. Various display patterns in accordance with the invention can be obtained utilizing cells according to the invention as illustrated in Figs. 2,3,3A and 4. Such illustrated displays and others described herein are intended to be exemplary and not exhaustive.

Referring now to Fig. 1, a field sensitive cell 90 is depicted in which electrodes 14A,14B are disposed on each of the plates 91 and 92. The conductive strips 28 of the opposed electrodes 14A,14B extend perpendicular to each other, thereby forming a grid pattern. Capacitances 34' are disposed in contact with the strips 28 of the respective electrode. Terminals 30A,30B and 31A,31B are connected to ends of respective resistive portion 24A,24B of each of the electrodes, while terminals 38A,38B are connected to the respective capacitance strips 34' disposed on each of the electrodes. The opposed plates 91,92 are offset in order that the capacitance strips 34' are in the non-active region of the cell 90. Although not shown, capacitances 34 and 36 can be provided for cell 90 as described in EP-A-0044637.

Referring now to Fig. 2, an embodiment of the invention is schematically illustrated in which the cell 90 is utilized. The terminals 30A,31A,30B,31B of each of the resistive portions 24A,24B of each of the electrodes 14A,14B are connected to respective poles of switches 93-96. The switches 93-96 are ganged to operate in unison. Contact 97 of switch 93 is connected to the positive supply 99 and contact 101 of switch 93 is connected to a variable dc supply 103. Contact 105 of switch 94 is also connected to the variable dc supply 103 and to contact 101. Contact 107 of switch 94 is connected to the negative dc supply 109. Similarly, switch 95 has a contact connected to the positive supply and a contact connected to the variable dc supply. Switch 96 has a contact connected to the negative supply and a contact connected to the variable dc supply with the contacts 112,113 of switches 95 and 96 being connected together and to the variable dc supply.

In operation, in one position of switches 93-96, one of the electrodes is operated as an address electrode while the other electrode is operated on the load electrode. In the other position of switches 93-96, the load and address electrodes are reversed.

For purposes of illustration, a twisted nematic liquid crystal material is contained in cell 90 and the magnitude of the positive and negative voltage supplies can be five volts. With the switches in the positions shown by the solid lines in Fig. 2, electrode 14A is the address electrode and electrode 14B is the load electrode. Positive 5 volts is applied to terminal 30A of resistive portion 24A of electrode 14A and negative 5 volts is imposed at electrode 31A of resistive portion 24A. For clarity, ten conductive strips have been shown for each of the electrodes. The voltage at each of the conductive strips for electrode 14A is indicated, +5 and -5 volts being present at the right-most and left-most conductive strips, respectively, with the voltages on each of the other strips diminishing toward the center. Accordingly, the central strip has zero volts. Terminals 30B and 31B of electrode 14B are connected together and to the variable dc source 103. Since essentially no current flows through the electrode 14B from source 103, each of the conductive strips and each portion of the resistive portion 24B will be at the same voltage. The variable dc voltage applied to electrode 14B therefore appears simultaneously across all of the conductive strips.

A series of zero potential points is generated at the intersection of conductive strips which are at the same potential. Thus, with +5 and -5 volts from sources 99 and 109 applied to electrode 14A and with zero volts applied to conductor 14B from variable source 103, a series of zero potential points is generated extending vertically through the center of the cell.

When the switch positions are reversed from those shown in Fig. 2 when +5 or -5 volts from sources 99 and 109 are applied to electrode 14B, and when zero volts is applied to electrode 14A from source 103, a series of zero potential points is generated which extend horizontally along the center of the cell (not shown).

When the switch positions are switched at a frequency which is faster than the rose and decay time of the liquid crystal material, only the single point intersection of the horizontally and vertically extending series of points will appear visible. Under this condition, a dot appears in the center of the display. The dot can be moved by varying the voltage output of the variable dc source 103. A moving dot can thereby be obtained.

As discussed above, the moving point or dot can be used as a scanning device. In one switch position, scanning in the X direction is carried out, while in the other switch position, scanning in the Y direction is carried out.

Since the turn-off time of the liquid crystal material is relatively slow compared to the turn-on time, the turn-off time acts like a persistence, and the entire display can be scanned before the liquid crystal material turns off. This feature of the invention permits operation of the display for imaging. Computer or microprocessor controls can be utilized for voltage generation and switching to provide scanning and image display.

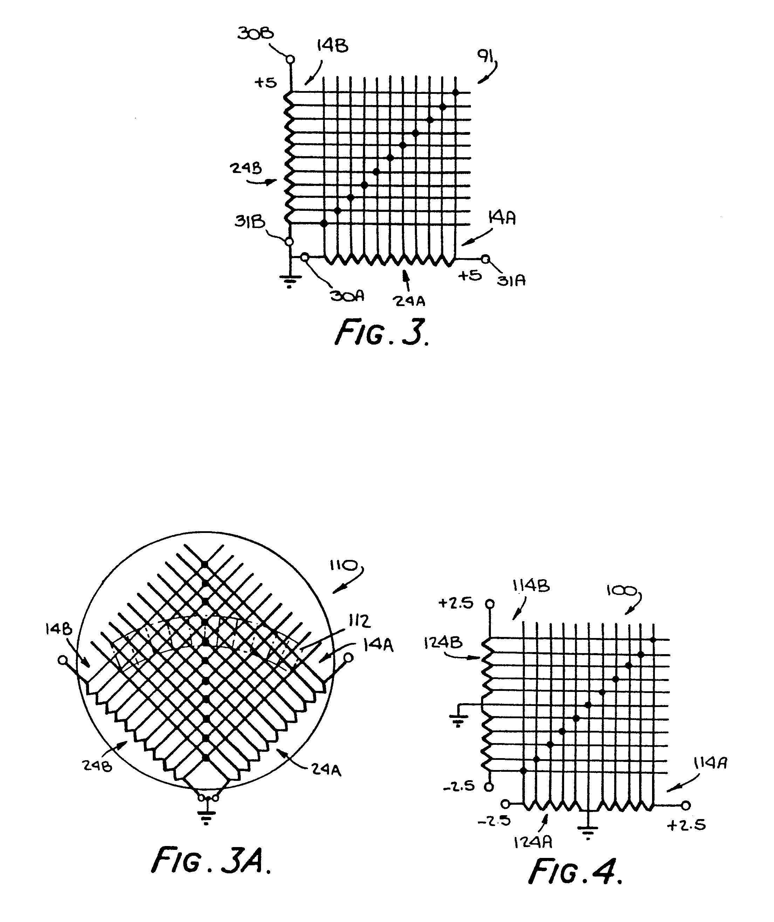

Referring now to Fig. 3, terminals 30A,31B of each of the electrodes 14A,14B of cell 90 are connected together and to ground. The cell 90 in Fig. 3 is capable of providing a pivoting or swinging line display. Each of the terminals 31A,30B is connected to a variable dc source of the same polarity. When an equal voltage of sufficient magnitude (for example 5 volts for twisted nematic liquid crystal material) is applied to each of terminals 30B,31A of the two electrodes, then a series of zero potential points are generated at the intersection of the conductive strips along the diagonal of the cell. If the voltage on terminal 31A of electrode 14A exceeds that of terminal 30B on electrode 14B, then the line is pivoted or swung counter-clockwise from the diagonal. If the magnitude of the voltage on terminal 31A of electrode 14A exceeds that of terminal 30B of electrode 14B, then the line is pivoted or swung clockwise.

The cell 90 in Fig. 3 can be used as a meter 110 as shown in Fig. 3A in which the line formed by the dots is the meter needle. Static information such as values of the parameter being measured associated with the indication lines 112 can be disposed on the cell. When cell 90 is used with a twisted nematic liquid material and polarizers, then the static information can be provided in the display by removing selected areas of the polarizers. Thus, light passing through the selected areas in the polarizers will not be blocked.

Referring now to Fig. 4, a cell 20 can be utilized as a meter display. Cell 120 includes electrodes 114A and 114B in which the resistive portions 124A,124B thereof are grounded in the center. Cell 120 can provide a pivoting line display which pivots 360° about the center of the display rather than 90° about a corner of the display as in Fig. 3. The display of Fig. 4 can be used for a meter in which the needle is pivotable over a full 360° range. Only half of the needle in Fig. 4 is displayed, one half of the needle being blocked out when it is an inactive quadrant. A positive and a negative voltage is applied to respective terminals of the resistive portions. Otherwise, the display of Fig. 4 operates similarly to the display of Fig. 3.

Referring now to Figs. 5,6 and 7, the display device 150 utilizes an optoceramic material 152, for example piezoelectric lead zirconate titanate (PLZT), as the field sensitive material. The optoceramic material rotates the plane of plane polarized light passing therethrough by 90° in the presence of a field and transmits plane polarized light therethrough substantially unrotated in the absence of an appropriate field.

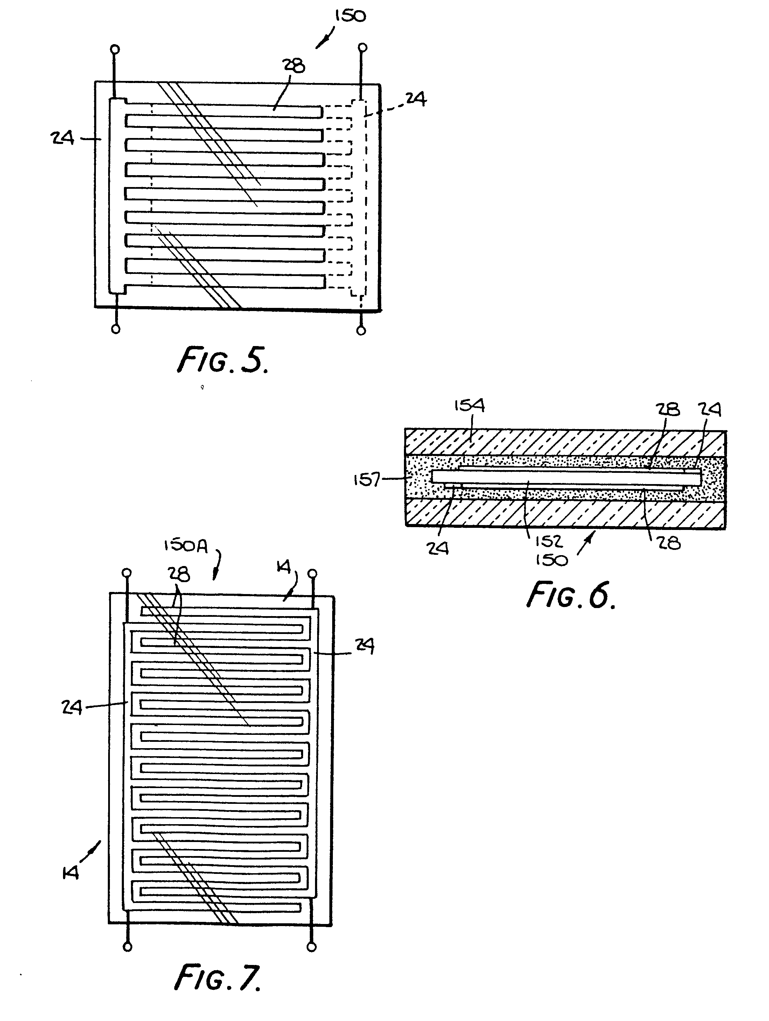

Referring to Figs. 5 and 6, cell 150 includes opposed, transparent spaced plates 154,155 preferably of glass. Interposed between the plates is a gelatin material 157 which supports therein a wafer 152 of optoceramic material. Electrodes 14 are disposed on opposed surfaces of or imbedded within opposed sides of the wafer. The conductive portions 28 of electrodes 14 face and extend parallel to each other and induce fields in wafer regions bounded on each side by pairs of the conductive strips. The resistive portions 24 are disposed in non-active regions of the cell.

Polarizers can be disposed adjacent the sides of cell 150 to provide desired displays, the polarizers being positioned so that the planes of polarization are at a 45° angle. Cell 150 is addressed as above described in connection with other cells to obtain displays as described above and other displays. The magnitude of the voltage applied to the cell electrodes to induce a field in the presence of which plane polarized light is transmitted unrotated is from about 0 to about 800 volts, depending on the thickness of the wafer and the particular optoceramic material.

Referring now to Fig. 7, the electrodes 14 of cell 150A may both be disposed in the same plane on a surface of or imbedded within the optoceramic material with the conductive strips 28 interleaved. This arrangement induces transverse fields between adjacent interleaved strips, the fields extending into the optoceramic material between adjacent conductive strips.

Cells 150 and 150A may also comprise other electrode arrangements as described above and the cells described above may comprise the electrode arrangements of cells 150,150A.

Certain cells have been described in connection with twisted nematic liquid crystal material. It will be understood that such cells may operate with a dynamic or quiescent scattering liquid crystal material to obtain certain of the display patterns described herein and other display patterns.

While description of the preferred embodiments has been made in connection with liquid crystal and optoceramic cells, other field sensitive cells may be utilized, such, for example, electroluminescent materials which can be employed include zinc sulphide doped with manganese. Such materials can generate light at 300 volts ac while being unexcited at dc voltages and at lower ac voltages. The displays can otherwise be generated as described above.

Additionally, it is possible to obtain some or all of the display patterns described herein utilizing a resistive electrode on one of the plates of the display in which the resistive electrode varies in resistance along a "zig-zag" path across the extent of the plate, as described in the aforementioned '875 patent.

Moreover, it is possible to obtain a display pattern described in connection with a specific embodiment in other embodiments.

CLAIMS

1.      A field sensitive display device for forming a display when subjected to visible light comprising a field sensitive material (22,152), first and second spaced electrodes (14A,14B; 114A,114B) each of the spaced electrodes being disposed in a different plane spaced apart from one another for inducing a field therebetween, means (16,20) for containing the field sensitive material and the spaced electrodes with the field sensitive material being relatively disposed between the spaced electrodes in order that a field induced by the spaced electrodes across the field sensitive material is capable of affecting the field sensitive material, a first (14A114A) of the spaced electrodes including an elongated impedance element (24A,124A) and a plurality of elongated conductive, substantially low impedance portions (28) spaced with respect to one another along their length, the plurality of low impedance portions being connected to different electrical locations disposed along the length of the impedance element and extending therefrom, first terminal means (30A,31A) connected to the ends of the elongated impedance element for applying a first electrical signal thereto, a second (14B,114B) of the spaced electrodes including an elongated impedance element (24B,124B) and a plurality of elongated, conductive, substantially low impedance portions (28) spaced with respect to one another along their length, the plurality of low impedance portions being connected to different electrical locations disposed along the length of the impedance element and extending therefrom, and a second terminal means (30B,31B) connected to the second electrode for applying a second electrical signal thereto.

2. The device according to claim 1, wherein the containing means comprise spaced plates (16,20) and the field sensitive material is disposed between the plates and between the electrodes, the impedance portion (24A, 124A) of the first electrode is a linearly-extending resistance which is disposed parallel to one side of a first plate (16) and the conductive, substantially low impedance portions (28) are conductive, substantially non-resistive strips extending transversely from the linearly-extending resistance.

3. The device according to claim 2, wherein the conductive, substantially low impedance portion (18) of the second electrode (18) extends uniformly parallel to and substantially co-extensive with a second plate (20) opposed to the conductive, substantially low impedance portions of the first electrode.

4. The device according to claim 2, wherein the second electrode (14B, 114B, 14) comprises a linearly-extending resistive portion (24B, 124B, 24) disposed adjacent one side of a second plate (20) and a plurality of conductive, substantially non-resistive strips (28) electrically connected to different resistive locations of the resistive portion and extending parallel to the second plate and transversely to the resistive portion, the conductive strips of the two electrodes extending transversely to one another generally in a grid pattern (Fig. 11) or parallel to and coextensively with one another (Fig. 17), with the field sensitive material being disposed between the conductive strips of the electrodes.

5. The device according to claim 4, wherein the strips of the two electrodes extend transversely to one another generally in a grid pattern and wherein the terminal means includes an individual end terminal connected to each end of the impedance portions (124A, 124B) of the electrodes (114A, 114B) and an individual intermediate terminal connected to each of the impedance portions of the electrodes between the end terminals, the intermediate terminals being grounded, and including means for applying first and second voltages of a first polarity to a respective end terminal of each of the impedance portions and for applying first and second voltages of an opposite polarity to the other end terminal of each of the impedance portions,whereby a line pivotable over 360° can be displayed.

6.    The device according to claim 4,wherein the strips of the two electrodes extend transversely to one another generally in a grid pattern and wherein the terminal means includes an individual terminal connected to each end of the impedance portions (24B, 124A) of the electrodes (14B, 114A), and including first switch means (93) connected to the terminal means of the resistive portion of a first of said electrodes and second switch means (95) connected to the terminal means of the resistive portion of a second of said electrodes, said first and second switch means being adapted to apply positive and negative voltages across the terminal means of the impedance portion of one of the electrodes while simultaneously connecting together the terminal means of the impedance portion of the other electrode and applying a variable  dc voltage to the connected terminal means of the other electrode, and alternatingly reversing the connections, whereby a moving dot can be displayed.

7.    The device according to claim 4, wherein the strips of the two electrodes extend transversely to one another generally in a grid pattern and wherein the terminal means includes an individual terminal connected to each end of the impedance portions (24A,24B) of the electrodes (14A, 14B), and wherein one of the terminals of the first and second electrodes are connected to ground and each of the other terminals of the impedance portions of the electrodes is adapted to being respectively connected to a first and a second variable voltage, whereby a line pivotable over 90° can be displayed.

8.   The device according to any one of the preceding claims, wherein the field sensitive material comprises one of the following: a liquid crystal material; a nematic liquid crystal material; a dynamic scattering nematic liquid crystal material; a quiescent scattering nematic liquid crystal material; an optoceramic material; and an electroluminescent material.

9.   The device according to claim 8, wherein the optoceramic material is in the form of a wafer (152), the device including a means (157) disposed between the plates for supporting the wafer.

10.   The device according to any one of the preceding claims wherein first and second light plane polarizer means is respectively transmitting plane polarized light in one plane and blocking plane polarized light in another plane disposed at an angle to the one plane, the spaced electrodes with the field sensitive material therebetween being disposed between the first polarizer means and the second polarizer means.

FIG. I.

FIG. 2.

LOAD VOLTAGE

SCANNING VOLTAGE

FIG. 3.

FIG. 3A.

FIG. 4.

FIG.5.

FIG.6.

FIG.7.

## European Patent Office

## EUROPEAN SEARCH REPORT

| | **DOCUMENTS CONSIDERED TO BE RELEVANT** | | |
|---|---|---|---|
| Category | Citation of document with indication, where appropriate, of relevant passages | Relevant to claim | CLASSIFICATION OF THE APPLICATION (Int. Cl.4) |
| D,Y | US-A-3 820 875 (BOHMER) <br> * Abstract; figures 1-11; column 1, lines 9-17; column 3, lines 17-28; column 5, lines 52-60; column 7, lines 15-47; claims 1-27 * | 1-4,8 | G 02 F 1/133 |
| D,A | | 5-7,9 | |
| Y | --- <br> US-A-3 834 794 (SOREF) <br> * Abstract; column 3, lines 15-67; column 6, lines 18-25 and line 65 - column 7, line 2; claims 1-4,8-10; figures 1,2,6 * | 1-4,8 | |
| A | | 10 | |
| A | --- <br> US-A-3 645 604 (DINH-TUAN NGO) <br> <br> * Abstract; column 2, lines 45-67; claims 1-7,11,12; figures 1,2 * | 1-5,7,8 | TECHNICAL FIELDS SEARCHED (Int Cl.4) <br> G 02 F 1/133 |
| D,A | --- <br> US-A-3 918 796 (FERGASON) <br> * Abstract; figures 1-3; claims 1,2,4-7,10,13-18,24-26,31,33-35,39,41,42 * <br> <br> --- -/- | 1,8 | |

The present search report has been drawn up for all claims

| Place of search | Date of completion of the search | Examiner |
|---|---|---|
| THE HAGUE | 28-02-1986 | FARNESE G.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

# EUROPEAN SEARCH REPORT

**European Patent Office**

## DOCUMENTS CONSIDERED TO BE RELEVANT

Page 2

| Category | Citation of document with indication, where appropriate, of relevant passages | Relevant to claim | CLASSIFICATION OF THE APPLICATION (Int Cl 4) |
|---|---|---|---|
| D,A | US-A-3 675 988 (SOREF)<br>* Column 1, lines 29-50; column 5, lines 49-70; column 6, lines 30-48; column 7, lines 46-59; claims 1-3,5,13,14,17,21; figures 4,10,19,23,24 *<br><br>--- | 1-5 | |
| A | FR-A-2 145 910 (INTERNATIONAL LIQUID XTAL CO.)<br>* Page 1, lines 30-36; page 2, lines 10-26, 31-35; claims 1,3,7-10; figure 1 *<br><br>----- | 1,9 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 28-02-1986 | FARNESE G.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82